# EUROPEAN PATENT SPECIFICATION

(11) **EP 2 813 133 B1**
(45) Date of publication and mention of the grant of the patent: **25.07.2018**
(21) Application number: 13746220.6
(22) Date of filing: 05.02.2013
(51) Int. Cl.: A01C 5/06, A01C 7/20

(54) **SEED SOWING MACHINE WITH A FURROW-OPENING MECHANISM**
SÄMASCHINE MIT EINEM FURCHENÖFFNUNGSMECHANISMUS
SEMOIR AVEC UN MÉCANISME D'OUVERTURE DE SILLON

(30) Priority: 06.02.2012 JP 2012022979; 04.02.2013 JP 2013019486
(43) Date of publication of application: 17.12.2014
(73) Proprietor: Incorporated Administrative Agency National Agriculture And Food Research Organization, Tsukuba-shi, Ibaraki 305-8517 (JP); Agritecno Yazaki Co., Ltd., Himeji-shi, Hyogo-ken 670-0996 (JP)
(72) Inventor: TACHIBANA, Yasuhiro, 1-40-2 Nisshin-cho Saitama-shi Saitama 331-8537 (JP); KAWAIDE, Tetsuo, 1-40-2 Nisshin-cho Saitama-shi Saitama 331-8537 (JP); MAEDA, Shigeyoshi, Himeji-shi Hyogo 670-0996 (JP); ARIYOSHI, Teruaki, Himeji-shi Hyogo 670-0996 (JP)
(74) Representative: Samson & Partner Patentanwälte mbB
(86) International application number: PCT/JP2013/052598
(87) International publication number: WO 2013/118715

(56) References cited:
- FR-A1- 2 727 601
- JP-A- H07 170 811
- JP-U- S5 641 513
- JP-U- H02 123 818
- US-A- 1 299 160
- US-A- 5 027 724

## Description

### [Technical Field]

The present invention relates to a seed sowing machine with a groove opening mechanism forming a groove necessary for insertion of a granular body, a powder, or a liquid into the ground.

### [Background Art]

A no-tillage cultivation technique for corn and the like has been established in recent years, and is widely used in Europe and the United States in particular, since that technique can curtail time and machines required for tilling and is excellent in a lodging resistance. However, a no-tillage seed sowing machine for corn used in Europe and the United States is large and inadequate for a small field in Japan, and thus no-tillage cultivation does not prevail in Japan.

As one of causes of increase in size of the no-tillage seed sowing machine, the following can be cited. Conventionally, in general, a cut line is made in the ground by one circular blade, and at an immediate rear thereof, two circular blades are disposed in a shape of 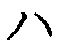 whose width is broadened from a front toward a rear in a direction of travel, so that a groove is widened by three blades in total. However, when three blades are made to act to a ground surface, a buoyant force is apt to be generated, so that an upward force acts to a machine body, so that a formed groove is shallow. In order to prevent buoyance of the machine body, increase in a weight of the machine body is necessary, and further, in order to tow or uphold the machine body, a large tractor is necessary.

Further, the no-tillage seed sowing machine used in Europe, the United States, and the like presupposes use in comparatively dry soil of Europe and the United States. Thus, when used in wet soil of Japan, which has much rain, there are problems that a rotary part tangled with wet earth or grass does not rotate, not forming an intended groove or a depth of a seed sowing groove not being made uniform, and that an upper portion of the groove is not infilled by earth, not having a seed germinate.

On the other hand, a seed sowing machine having a groove opening mechanism for no-tillage field has been developed also in Japan, and there is conventionally known a method in which a rotary blade is rotated in a surface of a no-tillage field or the like by using a power source from a tractor via a PTO and a groove for seed sowing is formed in a soil surface.

Patent Document 1 discloses, for example, a tractor towing type direct seed sowing machine in which a soil guide cover is installed to a machine body via a buffer member and thus the machine body is not damaged even if a foreign object such as a stone is caught in forming a groove in a solid and firm no-tillage field. Further, Patent Document 2 describes a partial tillage device in which a position of a tillage tine is adjustable and a seed sowing row interval can be changed.

On the other hand, Patent Document 3 describes a no-tillage seed sowing machine performing groove forming, seed sowing, covering with soil, and the like only by towing without using a motive power of a tractor.

Further, in a seed sowing machine having a groove opening mechanism, a problem sometimes occurs that earth enters the inside of a seed outlet port, to clog the seed outlet port. In order to prevent such entry of earth, one which has a cover installed to a seed dropping port is disclosed in Patent Document 4, and one in which a seed sowing tube has flexibility and can avoid a clod is disclosed in Patent Document 5, for example.
From US 1,299,160 A a disk drill is known having a drag bar wherein supported on the drag bar is a disk. Further, a seed boot connected to the drag bar is shown having a downwardly extending distributing end which comprises wings.

An other seed sowing machine of the known art is disclosed in FR 2 727 601 A1.

### [Prior Art Document]

### [Patent Document]

[Patent Document 1] Japanese Laid-open Patent Publication No. 2011-10560
[Patent Document 2] Japanese Laid-open Patent Publication No. 2008-148667
[Patent Document 3] Japanese Laid-open Patent Publication No. 2011-110009
[Patent Document 4] Japanese Utility Model Application Publication No. Sho 60-62213
[Patent Document 5] Japanese Utility Model Bulletin No. Hei 5-034494

### [Disclosure of the Invention]

### [Problems to Be Solved by the Invention]

However, in methods of forming a groove by a rotary blade as in aforementioned Patent Documents 1, 2, seed sowing work is performed after a process of once churning up earth and returning that earth for filling, work at a high speed is not possible. Further, in a case of a no-tillage field with many residues or of a wet field, a rotary member cannot avoid being tangled with the residue, a weed earth or the like, and thus, there is a problem that smooth seed sowing work is hampered. Therefore, in the rotary blade method, a limit of a speed of a tractor is about 0.5 to 1.0 m/s, and there is a problem that the method cannot cope with high-speed work of about 2 m/s.

Further, in a case of aforementioned Patent Document 3, if the machine is moved at a high speed, double disks churning up earth substantially in widening a groove, earth for covering is removed from surroundings of the groove, and the machine cannot cope with high-speed work by a tractor. Further, there is a problem that earth churned up by the double disks adheres to a seed pushing disk to tend to hamper rotation of the seed pushing disk.

Further, either of aforementioned Patent Documents 4, 5 does not have means for discharging earth when earth enters the inside from the seed outlet port.

An object of the present invention is to provide a seed sowing machine with a groove opening mechanism capable of forming a groove at a high speed when the groove is to be formed in the ground such as a no-tillage field, without damaging a machine body by being tangled with a residue of a former crop, a weed, earth, or the like, and without hampering smooth rotation of a rotating portion, and a seed sowing machine having that groove opening mechanism and capable of performing seed sowing work at a high speed.

### [Means for Solving the Problems]

In order to solve the above-described problem, the present invention provides a seed sowing machine comprising a groove opening mechanism forming a groove in soil while moving in a direction of travel, the groove opening mechanism having: one disk colter rotating at a time of moving and making a cut in a vertical direction in relation to a ground surface with a blade edge provided in an outer circumference; and a widening section provided in a rear of the disk colter in relation to the direction of travel and widening the groove cut by the disk colter, wherein the widening section has, in a front surface of a disk colter side, a widening member in which a taper is formed in a direction widening from the disk colter side toward a rear; and wherein the widening section has a stiffening plate member in the disk colter side, and wherein the stiffening plate member overlaps a part of the outer circumference of the disk colter when viewed from a side surface in relation to the direction of travel. Further, the seed sowing machine comprises a seed guiding member which forms a slit and is provided adjacently in a rear of the widening section, wherein a seed is discharged from the slit; and a slit cleaning mechanism including: a rotary shaft whose axial direction is a width direction of the slit; a reset lever fixed to the rotary shaft; a cleaning member one end of which is fixed to the reset lever and the other end of which extends to a ground surface side and is disposed inside the slit; and an elastic body one end of which is mounted on the reset lever and the other end of which is fixed to an opposite side of the reset lever in relation to the rotary shaft.

Further, the stiffening plate member preferably has a side surface and a bottom surface made of a lower edge of the side surface bent to a center side in a width direction, and the bottom surface is preferable to be close to the outer circumference of the disk colter.

A maximum width size of the widening section is preferable to be smaller than a size of a depth of the groove cut by the disk colter. In the widening member, a material excellent in a durability and an abrasion resistance is preferable to be used at least for a surface contacting soil.

An interval between outer sides of both sides of the seed guiding member can be the same as a maximum width of the widening member.

The cleaning member can be two wire members contacting inner sides of both side surfaces of the seed guiding member, respectively. Further, a stopper can be provided which stops rotation of the reset lever at a position at which a tip portion of the cleaning member reaches a front end of the slit and at a position at which the tip portion of the cleaning member comes out of a rear of the slit, respectively.

### [Effect of the Invention]

A groove opening mechanism of the present invention has a simple structure constituted with a disk colter and a widening section, and can form a groove only by being towed, without requiring a PTO motive power. Further, the groove opening mechanism of the present invention has a small mass, and can work while being mounted on a not-large tractor. Further, since an action of churning up earth by the groove widening section is small and a rotary member to be tangled with a residue of a former crop, a weed, or earth is not installed, high-speed work is possible even in a field with many residues or in wet soil.

### [Brief Description of the Drawings]

[Fig. 1] Fig. 1 is a side view of a seed sowing machine having a groove opening mechanism according to the present invention;
[Fig. 2] Fig. 2 is an enlarged view of a groove opening mechanism part of Fig. 1;
[Fig. 3] Fig. 3 is a perspective view of the groove opening mechanism part of Fig. 1;
[Fig. 4] Fig. 4 is a cross-sectional view taken along a portion A-A of Fig. 2;
[Fig. 5] Fig. 5 is a schematic diagram of an inner structure viewed from a side surface direction of a slit cleaning mechanism according to the present invention;
[Fig. 6] Fig. 6 is a schematic diagram of the inner structure of Fig. 5 viewed from a width direction;
[Fig. 7(a) to Fig. 7(c)] Fig. 7(a) to Fig. 7(c) are explanatory diagrams showing actions of the slit cleaning mechanism, Fig. 7(a) showing a state where the seed sowing machine is raised,
Fig. 7(b) showing a state where the seed sowing machine is put to the ground, and Fig. 7(c) showing a state where the seed sowing machine is moved;
[Fig. 8] Fig. 8 is an exploded perspective view of an example of a seed feeding device used in the seed sowing machine of Fig. 1; and
[Fig. 9] Fig. 9 is an enlarged view of a portion B of Fig. 4.

### [Mode for Carrying out the Invention]

Hereinafter, an embodiment of the present invention will be described with reference to the drawings.

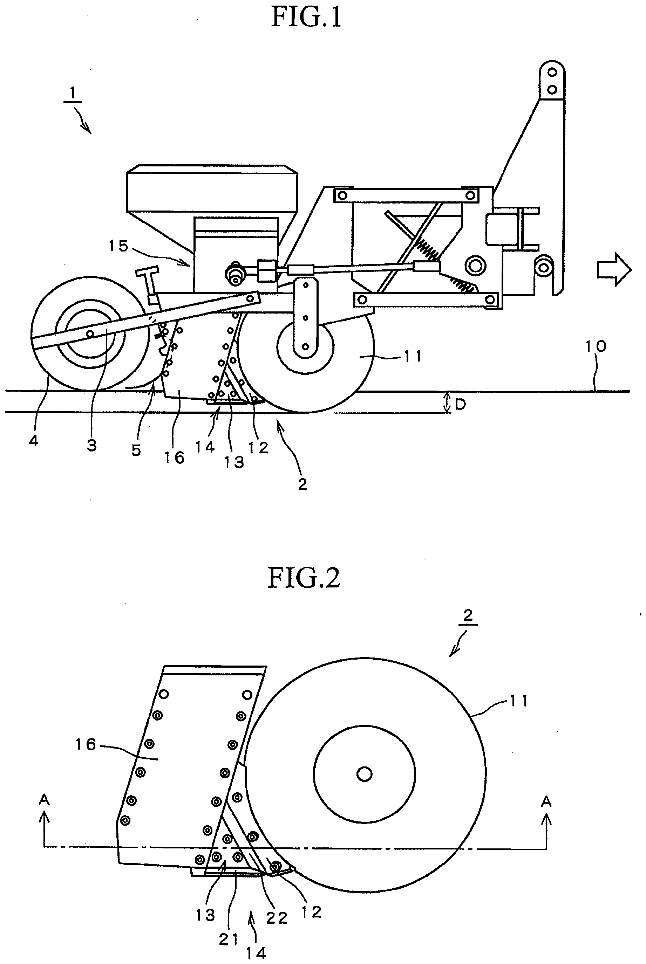

Fig. 1 shows an example of a seed sowing machine having a groove opening mechanism of the present invention, and in the present embodiment, an example will be described in which the groove opening mechanism of the present invention is installed in a no-tillage seed sowing machine.

A seed sowing machine 1 is mounted on a tractor (not shown) and run in a direction of an arrow. A groove opening mechanism 2 mounted on the seed sowing machine 1 has a disk colter 11, and a widening section 14 having a stiffening plate member 12 and a widening member 13 in a rear of the disk colter 11 in a direction of travel. Further, a seed guiding member 16 of a seed sowing section 15 is provided adjacently in a rear of the widening section 14. The seed guiding member 16 is made of a pair of plate materials disposed facing each other in a width almost the same as a maximum width of the widening section 14, and a slit 17 through which a seed passes is formed between the plate materials. In a rear of the seed guiding member 16, a tamping wheel 4 coupled with a main body portion of the seed sowing machine 1 via a tamping wheel frame 3 is provided.

The disk colter 11 has a thin disk shape as a whole, and has a sharp blade edge pointed in an outer circumferential side in an entire outer circumference. As a result that the seed sowing machine 1 is towed, the disk colter 11 rotates and cut in a vertical direction in relation to a ground surface 10 with the blade edge of the outer circumference, to form a narrow groove.

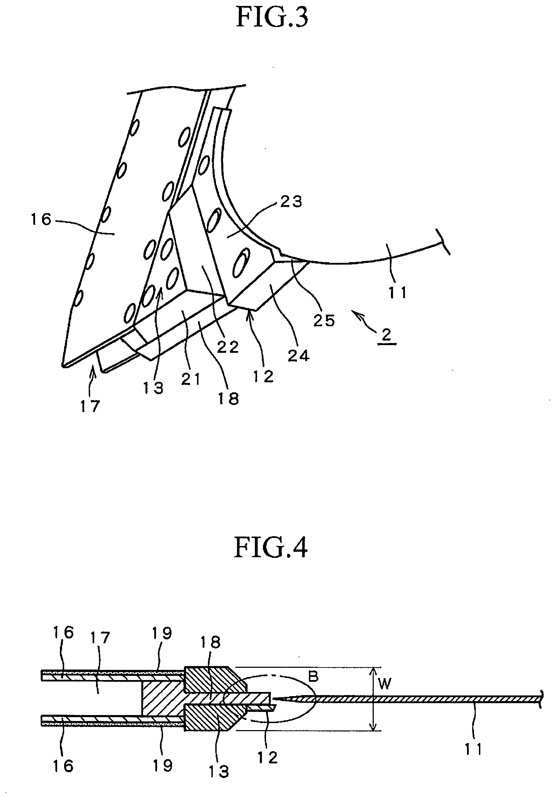

As shown in Fig. 1 to Fig. 3, the stiffening plate member 12 and the widening member 13 are provided in a close vicinity to the outer circumference of the disk colter 11, in a rear in the direction of travel of the disk colter 11. When viewed from a side in relation to the direction of travel of the seed sowing machine 1, a front in the direction of travel of the stiffening plate member 12 overlaps a part of the outer circumference of the disk colter 11, for example, a part equivalent to about 1/12 to 1/2, preferably about 1/6 to 1/4 of a whole circumference of the disk colter 11. As a material of the stiffening plate member 12, tempered steel having a high hardness is preferable. The widening member 13 has a triangular shape as a shape viewed from a side in the direction of travel in the present embodiment, and as shown in Fig. 2 and Fig. 3, a taper is formed in a bottom surface 21 in a ground surface side and in a front surface 22 of a disk colter 11 side at a front in the direction of travel. The taper is formed in a manner to be broadened from a side in a width direction toward a center, that is, in a direction where an area of a triangle in a side surface of the widening member 13 becomes large. In other words, first, a right lower part in Fig. 2 of the widening member 13 enters the groove having been cut by the disk colter 11, and as moving in the direction of travel by towing, a wider part of the widening member 13 gradually enters the groove along the taper, and thereby, the groove is widened. Note that the widening member 13 is not limited to one whose side surface is triangular, and it suffices that a taper is formed in a direction widening from the disk colter 11 side to the rear in the direction of travel.

Further, the stiffening plate member 12 has, as shown in Fig. 3, a side surface 23 disposed in a side in the direction of travel, and a bottom surface 24 bent from a lower end of the side surface 23 to a center side in a width direction. In the present embodiment, a bend angle of the side surface 23 and the bottom surface 24 is approximately right-angled, and the bottom surface 24 is a surface in a horizontal direction. The bottom surface 24 is provided in order to prevent earth from entering between the stiffening plate member 12 and the disk colter 11. Thus, a front end 25 in relation to a direction of travel of the bottom surface 24 is made close to the blade edge of the disk colter 11. The front end 25 and the disk colter 11 are preferable to have a slight gap so as not to hamper rotation of the disk colter 11. A width of the bottom surface 24 is preferable to be 3 to 8 mm. Note that the bottom surface 24 is not limited to the surface in the horizontal direction but can have a V-shape in which a center side protrudes downward, for example. In such a case, a bend angle of the side surface 23 and the bottom surface 24 can be about 60°.

In the present embodiment, as shown in Fig. 3 and Fig. 4, a core 18 of steel, for example, is disposed from an inner side of the slit 17 between a pair of the plate materials of the seed guiding member 16 toward a neighborhood of the blade edge of the disk colter 11, and a pair of widening members 13 symmetrical centering on the core 18 in a width direction is mounted thereon, and the stiffening plate member 12 is mounted on one side surface of the core 18. The stiffening plate member 12 is preferable to have a mounting portion of a long hole so that a mounting position can be adjusted in a radial direction of the disk colter 11, in order that the stiffening plate member 12 can always overlap a part of the outer circumference of the disk colter 11 when viewed from the side surface even when the blade edge of the disk colter 11 is worn. Note that the stiffening plate members 12 can be provided in both side surfaces, and in such a case, a front of at least one of the stiffening plate members is made to overlap a part of the outer circumference of the disk colter as described above. Further, either one of the stiffening plate members has a side surface and a bottom surface made of a lower end of the side surface bent toward a center side in the width direction, and a front end of the bottom surface is made close to an outer circumference of a disk colter. Further, the core 18 and the stiffening plate member 12 can be formed integrally. Further, the core 18 and the widening member 13 can be formed integrally.

With regard to the widening member 13, for the entire thereof or for at least a surface contacting soil, a material preventing adherence of earth or the like and is excellent in a durability and an abrasion resistance is used, and it is preferable to use a synthetic resin such as super high molecular polyethylene, for example. Further, a synthetic resin film 19 made of super high molecular polyethylene or the like having a thickness of about 0.5 mm, for example, can be affixed to an outer surface of the seed guiding member 16.

The seed guiding member 16 of the seed sowing machine 1 is provided with a slit cleaning mechanism 5 scraping out a foreign object such as earth which has entered a lower part of the slit 17. Hereinafter, the slit cleaning mechanism 5 will be described.

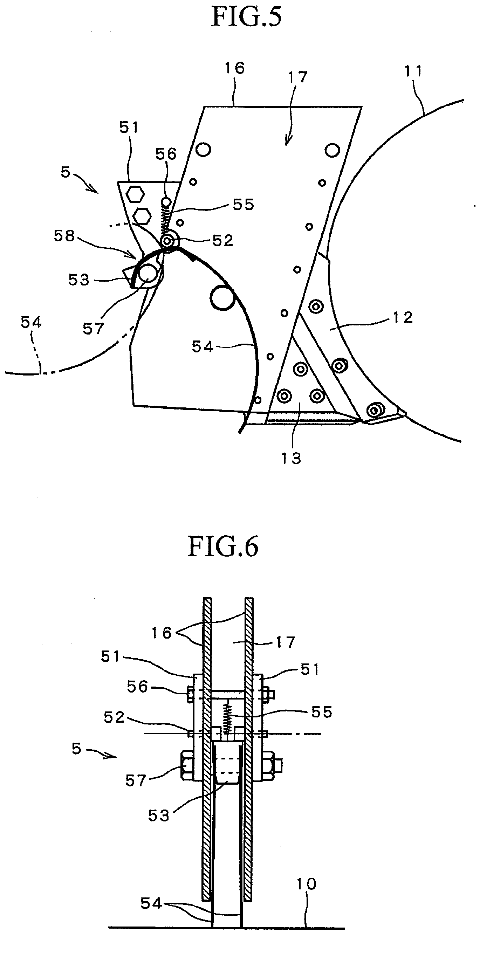

Fig. 5 and Fig. 6 show an example of the slit cleaning mechanism of the seed sowing machine 1 according to the present invention, Fig. 5 showing an inside structure of the inside of the slit 17 viewed from a side surface direction of the seed sowing machine 1 and Fig. 6 showing an outline of the internal structure viewed from a width direction (front) of the slit 17. A facing pair of frames 51, 51 is mounted in a rear side in the direction of travel of the seed guiding member 16, and a rotary shaft 52 whose axial direction is the width direction of the slit 17 is mounted penetrating the pair of frames 51, 51. In a lower side of the rotary shaft 52, a reset lever 53 having an almost U-shaped cross sectional shape is fixed to the rotary shaft 52 by welding, for example. Further, two linear cleaning members 54, 54 are each fixed to the reset lever 53 by one end. The respective cleaning members 54, 54 are provided in a manner to contact inner sides of the seed guiding member 16 being both side surfaces of the slit 17, and has curved shapes, extending so that lower tips may contact the ground surface 10. Further, there is provided an elastic body 55 whose one end is fixed to the reset lever 53 and the other end is fixed to a frame 51 side. For fixing of the elastic body 55 to the frame 51 side, for example, as shown in Fig. 6, the elastic body 55 is mounted on a shaft of a bolt 56 coupling the pair of frames 51, 51, upper than the rotary shaft 52.

The frame 51 is provided with a stopper 57 restricting rotation of the reset lever 53 and the cleaning member 54. The stopper 57 can be constituted with a bolt coupling the pair of frames 51, 51, for example, as exemplified in Fig. 6. In other words, as shown in Fig. 5 for example, when a tip portion of the cleaning member 54 reaches a most front end in the direction of travel of the slit 17, the reset lever 53 hits a surface of a left side in Fig. 5 of an outer circumference of the stopper 57, and further rotation of the reset lever 43 is stopped. Besides, when discharge of earth or the like described later is performed and the tip portion of the cleaning member 54 comes to a position (two dot chain line in Fig. 5) out of a rear of the slit 17, the reset lever 53 hits a surface of a right side in Fig. 5 of the outer circumference of the stopper 57, and further rotation of the reset lever 53 is stopped.

For the cleaning member 54, a material hard to be plastic-deformed is used, and a piano wire or the like, for example, can be used. The cleaning member 54 can be wound twice or three times at a middle portion to improve an elastic force. Further, in order for the two cleaning members 54, 54 to respectively contact the inner sides of both side walls of the seed guiding member 16 for sure, the tip portions of the two cleaning members 54, 54 are preferable to be mounted in a manner to be slightly pressed to inner side lower ends of the slit 17. In such a case, in order that the tip portion of the cleaning member 54 enters inside of the slit 17 again for sure by rotation of the reset lever 53 after the tip portion of the cleaning member 54 comes out from the slit 17, a mounting position of an upper end portion of the cleaning member 54 and a position of the stopper 57 are set so that an upper portion of the cleaning member 54 may be always positioned inside the slit 17.

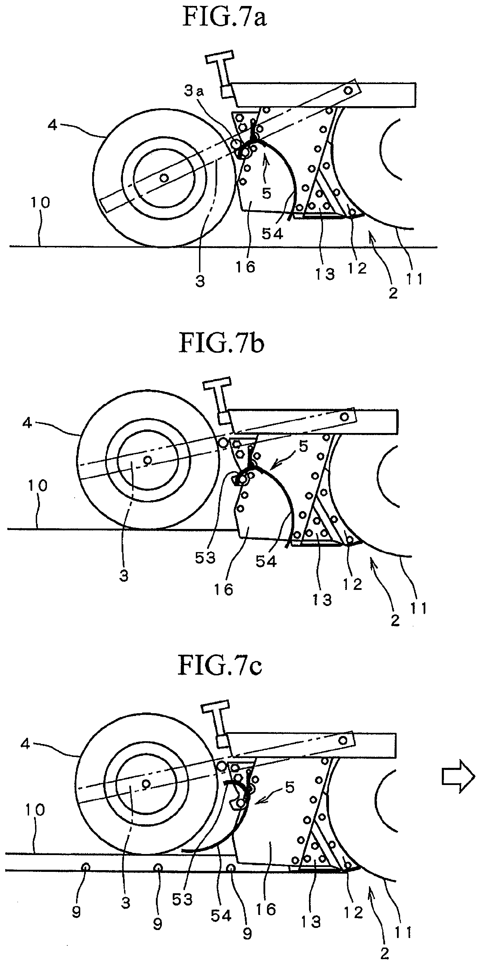

Fig. 7(a) to Fig. 7(c) show actions of the slit cleaning mechanism 5 incidental to operation of the seed sowing machine 1. As shown in Fig. 7(a), when the seed sowing machine 1 is apart from the ground, the tamping wheel 4 comes down by its own weight. On this occasion, a transverse member 3a mounted on the tamping wheel frame 3 supporting the tamping wheel 4 to a main body of the seed sowing machine 1 comes down along a rear of the frame 51, pushing down the reset lever 53. By a force thereof, the reset lever 53 rotates counter-clockwise in Fig. 7(a), and when a point of contact of the reset lever 53 and the elastic body 55 is at more front than a center of the rotary shaft 52, the reset lever 53 further rotates by being biased by the elastic body 55, and the tip portion of the cleaning member 54 is pushed forward to reach a front end of the slit 17. By forming a recessed portion 58 in the frame 51 as shown in Fig. 5, the transverse member 3a can be prevented from coming down further to push the reset lever 53. Note that an action of pushing down the reset lever 53 can be manually performed.

Next, as shown in Fig. 7(b), when the seed sowing machine 1 comes down and the groove opening mechanism 2 contacts the ground, the transverse member 3a is detached from the recessed portion 58 of the frame 51. Since a force to rotate the reset lever 53 does not work in such a state, the reset lever 53 is pulled by the elastic body 55 at the same position as that in Fig. 7(a), and the tip portion of the cleaning member 54 contacts the ground surface 10 while positioning at the front end of the slit 17. On this occasion, earth or the like sometimes enter the inside of the slit 17.

When the seed sowing machine 1 proceeds from a state of Fig. 7(b) in an arrow direction as shown in Fig. 7(c), by a machine body proceeding while a tip of the cleaning member 54 contacting the ground surface 10, a force is applied to the reset lever 53 via the cleaning member 54, so that the reset lever 53 rotates clockwise in Fig. 7(c). When the point of contact of the reset lever 53 and the elastic body 55 is more rear than the center of the rotary shaft 52, the reset lever 53 is biased by the elastic body 55 and rotates further, and stops at a position of the stopper 57. Thereby, the tip portion of the cleaning member 54 is pushed rearward and protrudes to the rear of the slit 17, and concurrently therewith, earth or the like having entered the slit 17 is discharged. If a force is not applied to the reset lever 53 thereafter, the reset lever 53 pulled by the elastic body 55 does not rotate, so that a position of the cleaning member 54 does not change, either. In such a state, groove opening and seed sowing are started. The tip portion of the cleaning member 54, since being out of the slit 17, does not obstruct discharge of a seed 9, and the cleaning member 54, since being apart from the ground, does not hit a seed having been sown, so that smooth sowing can be performed.

In the slit cleaning mechanism 5 shown in Fig. 5 and Fig. 6, as a result that the point of contact of the elastic body 55 and the reset lever 53 is displaced from the center of the rotary shaft 52 in a front and rear direction, a toggle mechanism is formed. Therefore, when a force is applied to the cleaning member 54 or the reset lever 53 by pressing of the transverse member 3a shown in Fig. 7(a) or by proceeding of the seed sowing machine 1 shown in Fig. 7(c), the position of the reset lever 53 is switched so that a position of being stopped by the stopper 57, that is, the position of the cleaning member 54, may be either one of the positions shown in Fig. 7(a) and Fig. 7(b) and Fig. 7(c). Thus, even if vibration or the like occurs in a state of Fig. 7(c) for example, the position of the cleaning member 54 does not move.

In the above-described slit cleaning mechanism 5, by using a wire material having elasticity for the cleaning member 54, an excessive friction force does not act on the side wall of the seed guiding member 16 and smooth contact is possible, even if the rotary shaft 52 is decentered. Therefore, the slit cleaning mechanism 5 is suitable as a mechanism discharging earth or the like inside the slit 17, particularly in a case where a seed is discharged from the narrow slit 17 as in the present embodiment. Further, earth or the like having entered the slit 17 is discharged for sure if the cleaning members 54, 54 are slid along the both side walls of the seed guiding member 16, and thus earth or the like does not obstruct discharge of the seed, enabling smooth seed sowing. Further, since the cleaning member 54 contacting the earth surface 10 has elasticity, plastic deformation does not occur even in a case where the tip of the cleaning member 54 hits the earth surface 10 at a time of rotation and is pushed upward, and it is possible to rotate while discharging earth or the like along the earth surface 10. As described above, the slit cleaning mechanism 5 can discharge earth or the like effectively with a simple mechanism, and besides discharge of earth or the like can be performed only by un up and down operation and forward traveling of a seed sowing machine which are performed in normal seed sowing work. Therefore, by having such a slit cleaning mechanism 5, clogging is prevented and high speed seed sowing can be performed in the seed sowing machine 1 having the groove opening mechanism 2.

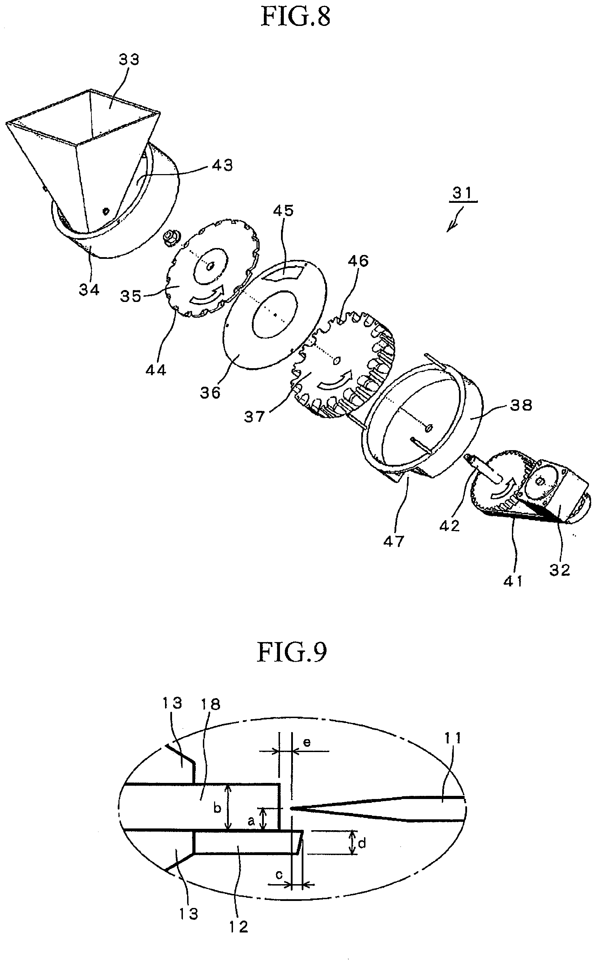

The seed sowing section 15 has a seed feeding mechanism 31 feeding a desired number of grains of seeds accurately and at a high speed. Fig. 8 shows an example of the seed feeding mechanism 31, and is an exploded view of composing members. The seed feeding mechanism 31 is provided with a motor 32 such as a DC servomotor, for example, as a rotation mechanism, and has a hopper 33, a supply-side frame body 34, a distribution plate 35, a delivery plate 36, a discharge plate 37, and a discharge-side frame body 38. The distribution plate 35 and the discharge plate 37 transmit a motive power of the motor 32 by a timing belt 41, for example, to rotate a drive shaft 42, and coaxially rotate at the same speed and in the same direction via the drive shaft 42.

The hopper 33 temporarily stores a seed therein and is provided with a supply port through which the seed is supplied to the inside of the supply-side frame body 34. The supply-side frame body 34 is a frame body having a cylindrical hollow portion 43, and on a reverse side thereof, the distribution plate 35 is disposed. The supply-side frame body 34 has an appropriate thickness in order that a seed accumulation should be formed in the hollow portion 13. The supply-side frame body 34 does not rotate and is fixed to the discharge-side frame body 38. The distribution plate 35 has a holder 44 holding the seed to be sown at a time therein provided in an outer circumferential portion thereof in a circumferential direction. A planar shape of the holder 44 is formed into a triangular shape which opens toward an outer circumference side of the distribution plate 35, thereby enabling adaption to both spherical seeds and flat seeds. The delivery plate 36 is provided between the distribution plate 35 and the discharge plate 37. The delivery plate 36 does not rotate and is fixed to the discharge-side frame body 38. In an upper portion of the delivery plate 36, namely in a position to be the upper side when the delivery plate 36 is assembled as the seed feeding mechanism 31, a delivery hole 45 through which the seed is delivered from the distribution plate 35 to the discharge plate 37 is formed. In the outer circumference of the discharge plate 37, a recessed portion 46 holding the seed delivered from the distribution plate 35 therein is provided. The discharge plate 37 is placed inside the discharge-side frame body 38. The discharge-side frame body 38 covers the entire outer circumference of the discharge plate 37 and has a discharge port 47 provided in a lower end portion thereof. Thereby, the seed held in the recessed portion 46 in the discharge plate 37 is conveyed downward by the rotation of the discharge plate 37 to be discharged through the discharge port 47.

The seed feeding device 31 is placed so that the seed is discharged rearward in relation to the direction of travel of the seed sowing machine 1. Thereby, a speed of the seed sowing machine 1 as a whole and a speed of the seed at a discharging time are impaired, so that a speed of the seed in relation to the ground is made smaller and a discharge position is not displaced in a lateral direction, and the seed can be discharged at an accurate position. Further, as shown in Fig. 1 to Fig. 4, the seed is discharged from the slit 17 between the pair of the plate materials of seed guiding member 16 disposed with the same width as that of the widening member 13. When a seed is guided to the ground through a pipe used in a seed guiding section of a conventional seed sowing machine, discharging directions or intervals are sometimes scattered since the seed is discharged while hitting an inner wall of the pipe, but by discharging from the slit 17 according to the present invention and allowing free fall, the seed can be discharged accurately at a seed interval controlled by the seed feeding mechanism 31.

Use of the groove opening mechanism of the present invention is not limited to the seed sowing machine on which the above-described seed feeding mechanism 31 is mounted, but by using the above-described seed feeding mechanism 31, seed sowing at a desired interval is possible even when the seed sowing machine is towed at a speed as high as 2 m/s or more.

When seed sowing is performed by the seed sowing machine 1 of the present embodiment described hereinabove, by towing the seed sowing machine 1 by the tractor in the arrow direction of Fig. 1, the disk colter 11 rotates and form a groove in a manner to cut a surface of a no-tillage field. On this occasion, a residue of a former crop or a weed existing in the field is cut by a sharp blade edge of the disk colter 11, and is divided to both sides of the disk colter 11. Further, in a case where an obstacle such as a stone exists in a front in the direction of travel, the disk colter 11 can climb over the obstacle. After a narrow groove is cut by the disk colter 11, the widening section 14 provided in the vicinity of the rear of the disk colter 11 enters the inside of the groove from its front edge, the groove being widened along the taper of the widening member 13, and finally, a groove is formed which has the same width as a width of a thickest portion formed by two widening members 13 in both sides in the width direction. Then, the seed is discharged from the slit 17 inside the seed guiding member 16.

As a result that the stiffening plate member 12 and a part of the outer circumference of the disk colter 11 overlap each other when viewed from the side surface, the residue or the weed having slightly entered between the disk colter 11 and the widening section 14 is cut by the blade of the outer circumference of the disk colter 11 and discharged out of the widening section 14, so that the residue or the like does not stay.

Here, with regard to a circumference of the widening section 14 in the present embodiment, a preferable size range in a case of use in the seed sowing machine 1 will be described based on Fig. 9 showing an enlargement of a portion B of Fig. 4.

A blade edge portion of the disk colter 11 and the stiffening plate member 12 can contact each other as long as abrasion does not occur in either member, but if an interval therebetween is too large, the residue or the weed having entered the gap is not cut, and thus a size a is preferable to be 4 mm or less, and is further preferable to be about 2 mm or less. With regard to a thickness b of the core 18, an appropriate size for mounting the stiffening plate member 12 thereon is required thereof, and it is preferable that b = 5 to 10 mm approximately.

With regard to a width c of a part in which the disk colter 11 and the stiffening plate member 12 overlap each other when viewed from the side surface, if the width is too small, the residue or the weed cannot be cut, and if the width is too large, the residue or the weed having been cut is deposited between the disk colter 11 and the stiffening plate member 12, generating a friction resistance and hampering rotation of the disk colter 11, and thus, it is preferable that c = 1 to 5 mm approximately. A thickness d of the stiffening plate member 12 is in a range which secures a sufficient strength to endure a resistance of earth and which does not receive a large resistance at a time of entrance to the narrow groove cut by the disk colter 11, and it is preferable that d = 4 mm or less. When an interval e between a tip of the blade edge of the disk colter 11 and the core 18 is too small, a friction occurs to each other, and when too large, the residue cannot be cut, and thus, it is preferable that e = 0.5 mm to 2 mm approximately.

Further, a widened groove width is about 25 mm, for example. The present invention has a simple configuration of the thin plate-shaped disk colter 11 which makes a sharp cut in the vertical direction in relation to the ground surface of the field and the widening section 14 broadening the cut, and the widening section 14 is not a rotary member that is apt to be tangled with a residue, a weed, or the like. Thus, it is possible to reduce entrance of the residue, the weed, earth, or the like, and a groove of a desired width can be continuously formed accurately and at a high speed. The groove is closed naturally by passing of the tamping wheel 4 of the seed sowing machine 1, as long as the groove width is about 25 mm, and it is unnecessary to separately install a component for covering with soil. Thus, an entire structure is simple and a rotating member or the like for covering with soil to which mud or the like is easy to stick, can be omitted, and thus high-speed work can be performed even in wet soil. The width of the widening section 14 is preferable to be 25 mm or less, and if the width exceeds about 30 mm, a groove is not always closed only by the tamping wheel 4 and a mechanism for covering with soil is separately required. The groove width, that is, a maximum width size (size W of Fig 4) of the widening section 14 is preferable to be smaller than a depth size (size D of Fig. 1) of the groove cut in the disk colter 11.

The respective sizes described above are numeric values suitable for a case where a granular seed such as corn is sown, and the numeric value may be different depending on a kind or usage of an object to be inserted into the groove, a kind of soil or a ground surface, and so on.

According to the present invention, since tangling or entrance of a residue, a weed, or earth to a groove opening mechanism is suppressed, and the residue or the like, if enters, is discharged easily to an outer side of the groove opening mechanism, so that smooth operation is possible even in a no-tillage field with many residues or in wet soil, so that stable formation of a seed sowing groove can be performed. Thus, it is possible to exclude tangling of a residue or the like to a machine body or depositing thereof, which have been problems as factors to obstacle work in conventional seed sowing work, and high-speed operation in which a working speed is 2 m/s or more can be coped with.

Further, in a case where a groove is widened conventionally by one circular blade and two circular blades disposed in a rear thereof in a shape of 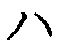 whose width is broadened from a front toward a rear in a direction of travel, high-speed work is not possible since a buoyant force is generated to buoy a machine body at a time of high-speed work. Alternatively, the machine body is made heavy in order to prevent buoyance. In the present invention, since a groove is cut by one thin plate-shaped disk colter, a widening member gets under the ground along a taper without rotating, a buoyant force is hard to be generated, so that a machine body is not required to be made heavy. Besides, since a groove width is small, a resistance at a time of forming the groove is small, enabling use by mounting on a tractor of about 30 horse power which is generally broadly used in Japan.

Further, in the groove opening mechanism of the present invention, motive power transmission by PTO driving is unnecessary and a structure is quite simple, and thus a cost of a device can be suppressed.

As described above, the present invention can be used in a dry field and a wet field, and further, is not limited to a no-tillage seed sowing machine, but can also be used similarly in a traditional field having been tilled and prepared. Further, the present invention is not limited to a seed sowing machine for a granular seed but can also be used as a groove opening mechanism forming a groove for insertion of a powder or a liquid.

Hereinabove, the preferred embodiment of the present invention has been described, but the present invention is not limited to such an example. It should be understood that various changes and modifications are readily apparent to those skilled in the art within the scope of the technical spirit as set forth in claims, and those should also be covered by the technical scope of the present invention.

For example, the cleaning member 54 is not limited to two wire members indicated in the above-described embodiment, but can be one wire member or three or more wire members, or can be a plate-shaped member.

### [Industrial Applicability]

The present invention is applicable to various machines/devices such as a seed sowing machine, slurry injection machine to the ground, and a soil disinfecting machine, which each perform processes of opening a groove in a surface of a field and thereafter inserting a seed, a liquid fertilizer, a chemical, or the like into the ground, and can heighten working speed thereof. Further, the present invention is applicable to a machine/device which performs processes of forming a groove in an object other than a field and inserting a granular, powdery, or liquid substance into the inside thereof, and in such a case, even if a fibrous substance or the like is mixed in the object in which a groove is to be opened, it is possible to form the groove without generation of clogging or the like by that substance,.

### [Explanation of Codes]

- 1: seed sowing machine
- 2: groove opening mechanism
- 3: tamping wheel frame
- 4: tamping wheel
- 5: slit cleaning mechanism
- 10: ground surface
- 11: disk colter
- 12: stiffening plate member
- 13: widening member
- 14: widening section
- 15: seed sowing section
- 16: seed guiding member
- 17: slit
- 18: core
- 21: bottom surface
- 22: front surface
- 31: seed feeding mechanism
- 51: frame
- 52: rotary shaft
- 53: reset lever
- 54: cleaning member
- 55: elastic body
- 57: stopper

## Claims

1. A seed sowing machine (1), comprising:
a groove opening mechanism (2) forming a groove in soil while moving in a direction of travel, comprising:
one disk colter (11) rotating at a time of moving and making a cut in a vertical direction in relation to a ground surface (10) with a blade edge provided in an outer circumference; and
a widening section (14) provided in a rear of said disk colter (11) in relation to the direction of travel and widening the groove cut by said disk colter (11),
wherein said widening section (14) has, in a front surface (22) of a disk colter side, a widening member (13) in which a taper is formed in a direction widening from the disk colter side toward a rear; and
wherein the widening section (14) has a stiffening plate member (12) in the disk colter side, and wherein the stiffening plate member (12) overlaps a part of the outer circumference of the disk colter (11) when viewed from a side surface in relation to the direction of travel;
a seed guiding member (16) which forms a slit (17) and is provided adjacently in a rear of said widening section (14), wherein a seed is discharged from the slit (17); **characterised by** a slit cleaning mechanism (5) including:
a rotary shaft (52) whose axial direction is a width direction of the slit (17);
a reset lever (53) fixed to the rotary shaft (52);
a cleaning member (54) one end of which is fixed to the reset lever (53) and the other end of which extends to a ground surface side and is disposed inside the slit (17); and
an elastic body (55) one end of which is mounted on the reset lever (53) and the other end of which is fixed to an opposite side of the reset lever (53) in relation to said rotary shaft (52).

2. The seed sowing machine according to claim 1,
wherein the stiffening plate member (12) has a side surface and a bottom surface made of a lower edge of the side surface bent to a center side in a width direction, and the bottom surface is close to the outer circumference of the disk colter (11).

3. The seed sowing machine according to claim 1,
wherein the cleaning member (54) is two wire members contacting inner sides of both side surfaces of said seed guiding member (16), respectively.

4. The seed sowing machine according to claim 1 comprising:
a stopper (57) stopping rotation of the reset lever (53) at a position at which a tip portion of the cleaning member (54) reaches a front end of the slit (17) and at a position at which the tip portion of the cleaning member comes out of a rear of the slit (17), respectively.

## Patentansprüche

1. Sämaschine (1) umfassend:
einen Rillenöffnungsmechanismus (2), der während einem Bewegen in eine Arbeitsrichtung eine Rille in einem Boden ausbildet, umfassend:
ein Scheibenpflugmesser (11), das sich zu einer Zeit des Bewegens dreht und das mit einem Messerrand, der an einem äußeren Kreisumfang vorgesehen ist, einen Schnitt in eine vertikale Richtung in Bezug zu einer Erdoberfläche (10) macht; und
einen Aufweitungsabschnitt (14), der in Bezug auf die Arbeitsrichtung an einer Rückseite des Scheibenpflugmessers (11) vorgesehen ist und der die durch das Scheibenpflugmesser (11) geschnittene Rille aufweitet,
wobei der Aufweitungsabschnitt (14) an einer vorderen Fläche (22) einer Scheibenpflugmesserseite ein Aufweitungselement (13) aufweist, bei dem eine Verjüngung in eine Richtung ausgebildet ist, die sich von der Scheibenpflugmesserseite in Richtung einer Rückseite aufweitet; und
wobei der Aufweitungsabschnitt (14) ein Versteifungsplattenelement (12) an der Scheibenpflugmesserseite aufweist, und wobei das Versteifungsplattenelement (12) einen Teil des äußeren Kreisumfangs des Scheibenpflugmessers (11), aus der Sicht einer Seitenfläche in Bezug auf die Arbeitsrichtung, überlappt;
ein Saatgutführungselement (16), das einen Schlitz (17) ausbildet und das benachbart auf einer Rückseite des Aufweitungsabschnitts (14) vorgesehen ist, wobei ein Saatgut aus dem Schlitz (17) ausgegeben wird;
**gekennzeichnet durch**
einen Schlitzreinigungsmechanismus (5) enthaltend:
eine drehbare Welle (52), deren axiale Richtung eine Breitenrichtung des Schlitzes (17) ist;
einen Rückstellhebel (53), der an der drehbaren Welle (52) befestigt ist;
ein Reinigungselement (54), dessen eines Ende an dem Rückstellhebel (53) befestigt ist und dessen anderes Ende sich zu einer Erdoberflächenseite erstreckt und das in dem Schlitz (17) angeordnet ist; und
einen elastischen Körper (55), dessen eines Ende an dem Rückstellhebel (53) montiert ist und dessen anderes Ende an einer gegenüberliegenden Seite des Rückstellhebels (53) in Bezug zu der drehbaren Welle (52) befestigt ist.

2. Sämaschine nach Anspruch 1,
bei der das Versteifungsplattenelement (12) eine Seitenfläche und eine untere Fläche aufweist, die aus einer unteren Kante der Seitenfläche hergestellt ist, die zu einer mittleren Seite in einer Breitenrichtung gebogen ist, und die untere Fläche in der Nähe des äußeren Kreisumfangs des Scheibenpflugmessers (11) ist.

3. Sämaschine nach Anspruch 1,
bei der das Reinigungselement (54) zwei Drahtelemente sind, die die inneren Seiten von beiden Seitenflächen des Saatgutführungselements (16) jeweils kontaktieren.

4. Sämaschine nach Anspruch 1, umfassend:
einen Stopper (57), der eine Rotation des Rückstellhebels (53) bei einer Position stoppt, an der ein Spitzenbereich des Reinigungselements (54) ein vorderes Ende des Schlitzes (17) erreicht und bei einer Position, an der der Spitzenbereich des Reinigungselements aus der Rückseite des Schlitzes (17) entsprechend herauskommt.

## Revendications

1. Machine à semer des graines (1), comprenant :
un mécanisme d'ouverture de sillon (2) formant un sillon dans la terre tout en se déplaçant dans une direction de cheminement, comprenant :
un coutre à disque (11) tournant à un moment de déplacement et réalisant une coupe dans une direction verticale par rapport à une surface de sol (10) avec une arête de lame prévue sur une circonférence extérieure ; et
une section d'élargissement (14) prévue dans une partie arrière dudit coutre à disque (11) par rapport à la direction de cheminement et élargissant le sillon coupé par ledit coutre à disque (11),
dans laquelle ladite section d'élargissement (14) comporte, au niveau d'une surface avant (22) d'un côté du coutre à disque, un organe d'élargissement (13) dans lequel un biseau est formé dans une direction s'élargissant depuis le côté du coutre à disque vers une partie arrière ; et
dans laquelle la section d'élargissement (14) comporte un organe de plaque de raidissement (12) du côté du coutre à disque, et dans laquelle l'organe de plaque de raidissement (12) chevauche une partie de la circonférence extérieure du coutre à disque (11) vue depuis une surface de côté par rapport à la direction de cheminement ;
un organe de guidage de graines (16) qui forme une fente (17) et est prévu de manière adjacente dans une partie arrière de ladite section d'élargissement (14), dans laquelle une graine est évacuée depuis la fente (17) ;
**caractérisée par**
un mécanisme de nettoyage de fente (5) incluant :
un arbre rotatif (52) dont la direction axiale est une direction de largeur de la fente (17) ;
un levier de réinitialisation (53) fixé à l'arbre rotatif (52) ;
un organe de nettoyage (54) dont une extrémité est fixée au levier de réinitialisation (53) et dont l'autre extrémité s'étend jusqu'à un côté de surface de sol et est disposée à l'intérieur de la fente (17) ; et
un corps élastique (55) dont une extrémité est montée sur le levier de réinitialisation (53) et dont l'autre extrémité est fixée à un côté opposé du levier de réinitialisation (53) par rapport audit arbre rotatif (52).

2. Machine à semer des graines selon la revendication 1,
dans laquelle l'organe de plaque de raidissement (12) comporte une surface de côté et une surface de dessous constituée d'un bord inférieur de la surface de côté courbé vers un côté de centre dans une direction de la largeur, et la surface de dessous est proche de la circonférence extérieure du coutre à disque (11).

3. Machine à semer des graines selon la revendication 1,
dans laquelle l'organe de nettoyage (54) est deux organes de fil entrant en contact respectivement avec des côtés intérieurs des deux surfaces de côté dudit organe de guidage de graines (16),.

4. Machine à semer des graines selon la revendication 1, comprenant :
un dispositif d'arrêt (57) arrêtant une rotation du levier de réinitialisation (53) dans une position dans laquelle une portion de pointe de l'organe de nettoyage (54) atteint une extrémité avant de la fente (17) et respectivement dans une position dans laquelle la portion de pointe de l'organe de nettoyage sort d'une partie arrière de la fente (17),.
